# EUROPÄISCHE PATENTANMELDUNG

(11) **EP 0 979 741 A2**
(43) Veröffentlichungstag der Anmeldung: **16.02.2000**
(21) Anmeldenummer: 99114982.4
(22) Anmeldetag: 31.07.1999
(51) Int. Cl.: B60B 33/02

(54) **Bremsbare Lenkrolle für Apparate, Geräte, Möbel od. dgl.**

(30) Priorität: 12.08.1998 DE 19836454
(71) Anmelder: Steinco Paul vom Stein GmbH, 42929 Wermelskirchen (DE)
(72) Erfinder: Schröder, Dieter, 42929 Wermelskirchen (DE); Weichbrodt, Tobias, 42929 Wermelskirchen (DE)
(74) Vertreter: Patentanwälte Ostriga & Sonnet

(57) **Zusammenfassung**

Dargestellt und beschrieben ist eine bremsbare Lenkrolle (10) für Apparate, Geräte, Möbel od. dgl. mit einem Tragteil (11), wenigstens einem am Tragteil (11) drehbar gelagerten Rad (14) und mit einem im Tragteil (11) angeordneten, höhenverstellbaren sowie von einer Rückstellfeder (25) belasteten Rückenbolzen (R), der das Tragteil (11) und eine Anschraubplatte (16) durchgreift und mit einem Bremsschuh (19) zumindest bewegungsverbunden ist, wobei im Bremstall auf den Rückenbolzen (R) ein apparateseitiger Feststeller einwirkt.

Die Aufgabe der Erfindung besteht darin, eine bremsbare Lenkrolle (10) gemäß dem Oberbegriff des Anspruchs 1 zu schaffen, die aufgrund ihrer einfacheren Konstruktion preiswerter herzustellen und zu montieren ist.

Die Lösung dieser Aufgabe ergibt sich dadurch, daß der Rückenbolzen (R) von einem ersten mit dem Tragteil (11) bewegungsverbundenen Bauteil (22) und einem zweiten apparateseitig gelagerten Bauteil (22) gebildet wird, die aneinander frei drehbar befestigt sind und daß sich die Rückstellfeder (25) apparateseitig abstützt.

## Beschreibung

Die Erfindung betrifft eine bremsbare Lenkrolle für Apparate, Geräte, Möbel od. dgl. mit einem Tragteil, wenigstens einem am Tragteil drehbar gelagerten Rad und mit einem im Tragteil angeordneten, höhenverstellbaren sowie von einer Rückstellfeder belasteten Rückenbolzen, der das Tragteil und eine Anschraubplatte durchgreift und mit einem Bremsschuh zumindest bewegungsverbunden ist, wobei im Bremsfall auf den Rückenbolzen ein apparateseitiger Feststeller einwirkt.

Eine derartige Lenkrolle ist beispielsweise aus der DE-OS 39 13 722 der Anmelderin bekannt. Darin wird eine Lenkrolle dargestellt und beschrieben, bei der der Rückenbolzen mit dem Bremskörper einen einstückigenstoffschlüssigen Schaltkörper ausbildet, an dem die Rückstellfeder unmittelbar mit ihrem einen Ende angreift und deren anderes Ende auf einem radfesten Widerlager abgestützt ist.

Bei dieser an sich vorteilhaften Lenkrolle wird es als verbesserungswürdig angesehen, daß sich die Schwenkbewegung relativ schwergängig vollzieht. Darüber hinaus ist bei dieser Lenkrolle einerseits keine Verstellung des einstückig-stoffschlüssigen Schaltkörpers zum Ausgleich der Fertigungstoleranzen bzw. von Abnutzungserscheinungen des Bremsschuhes vorgesehen und die Höhe der Bremskraft verbesserungswürdig.

Des weiteren ist aus der DE-PS 39 13 719 C2 der Anmelderin ebenfalls eine bremsbare Lenkrolle bekannt, bei der das zusätzliche Federorgan körperlich getrennt von der Rückstellfeder zwischen dem Feststeller und dem Steuerglied und bei nicht eingriffsfähiger Zuordnung von Bremsfläche und Gegenbremsfläche kraftspeichernd angeordnet ist. Diese ebenfalls grundsätzlich vorteilhafte Lenkrolle weist zwar eine Verstellbarkeit des Rückenbolzens und damit der Bremsvorrichtung auf, jedoch ist letztere relativ aufwendig als Felgenbremse ausgebildet.

Ausgehend von dem zuerst genannten Stand der Technik besteht daher die Aufgabe der Erfindung darin, eine neue bremsbare Lenkrolle gemäß dem Oberbegriff des Anspruchs 1 zu schaffen, die aufgrund ihrer einfacheren und trotzdem belastbareren Konstruktion preiswerter herzustellen und zu montieren ist sowie die o.g. Nachteile nicht aufweist.

Die Lösung dieser Aufgabe ergibt sich aus den Merkmalen des Anspruchs 1, insbesondere den Merkmalen des Kennzeichenteils, wonach der Rückenbolzen von einem ersten mit dem Tragteil bewegungsverbundenen Bauteil und einem zweiten apparateseitig gelagerten Bauteil gebildet wird, die aneinander frei drehbar befestigt sind und daß sich die Rückstellfeder apparateseitig abstützt.

Die erfindungsgemäße Bremsrolle weist den grundsätzlichen Vorteil auf, daß auch bei einbaubedingter Belastung des zweiteiligen Rückenbolzens durch den apparateseitigen Festeteller eine leichtgängige Schwenkung des Rades einschließlich Tragteil möglich ist.

Darüber hinaus wird es als vorteilhaft angesehen, daß der Bremsschuh im oder an Tragteil und dem darin drehbar gehaltenen Rad undrehbar angeordnet sein kann, wodurch mit Hilfe großer zur Verfügung stehenden Bremsflächen auf die Radoberfläche eine höhere Bremskraft übertragen werden kann.

Bei einer Ausführungsform der Erfindung ist das erste Bauteil bolzenartig ausgebildet und mit seinem freien Endbereich in einem hülsenartigen zweiten Bauteil drehbar verrastet. Hierbei besteht der Rückenbolzen vorteilhafterweise aus einfach herzustellenden und zu montierenden Bauteilen.

Eine weitere Ausführungsform ist dadurch gekennzeichnet, daß das bolzenartige Bauteil mit dem Bremsschuh fest verbunden ist und mit seinem freien Endbereich in einer Betätigungshülse so drehbar verrastet wird, daß zwischen der Betätigungshülse und der Anschraubplatte die Rückstellfeder gehalten ist.

Bei einer weiteren besonders bevorzugten Ausführungsform der Erfindung ist das bolzenartige Bauteil als im Bremsschuh angeordnete Gewinde-Stellschraube ausgebildet. Bei dieser erfindungsgemäßen Konstruktion ist es durch eine einfache Verstellung der Gewinde-Stellschraube möglich eventuelle Fertigungstoleranzen bzw. Abnutzungserscheinungen im Bereich der Bremsflächen auszugleichen.

Weitere Vorteile der Erfindung ergeben sich aus dem nachfolgenden Patentanspruch sowie der Beschreibung eines Ausführungsbeispiels. Es zeigen:
Fig. 1 einen Schnitt durch eine bremsbare Lenkrolle im ungebremsten Zustand,
Fig. 2 eine Schnittdarstellung gemäß Fig. 1 im gebremsten Zustand,
Fig. 3 eine teilweise Explosionsdarstellung, insbesondere der Bremsvorrichtung,

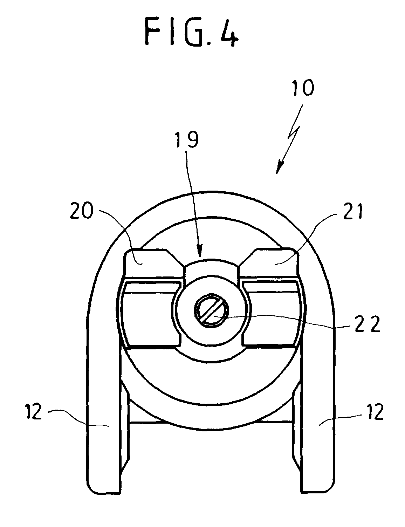

Fig. 4 eine Unteransicht des Tragteils einschließlich Bremsvorrichtung.

In den Zeichnungen ist eine bremsbare Lenkrolle insgesamt mit der Bezugsziffer 10 bezeichnet.

Die Lenkrolle 10 weist ein Tragteil 11 mit zwei Gabelschenkeln 12 auf, in denen mittels einer Radachse 13 ein Rad 14 gehalten ist. Apparateseitig ist das Tragteil 11 über ein Wälzlager 15 an einer Anschraubplatte 16 drehbar angeordnet. Während die Anschraubplatte 16 teilweise als obere Kugellagerschale 17 fungiert, ist innerhalb des Tragteils 11 zusätzlich noch eine untere Kugellagerschale 18 vorhanden.

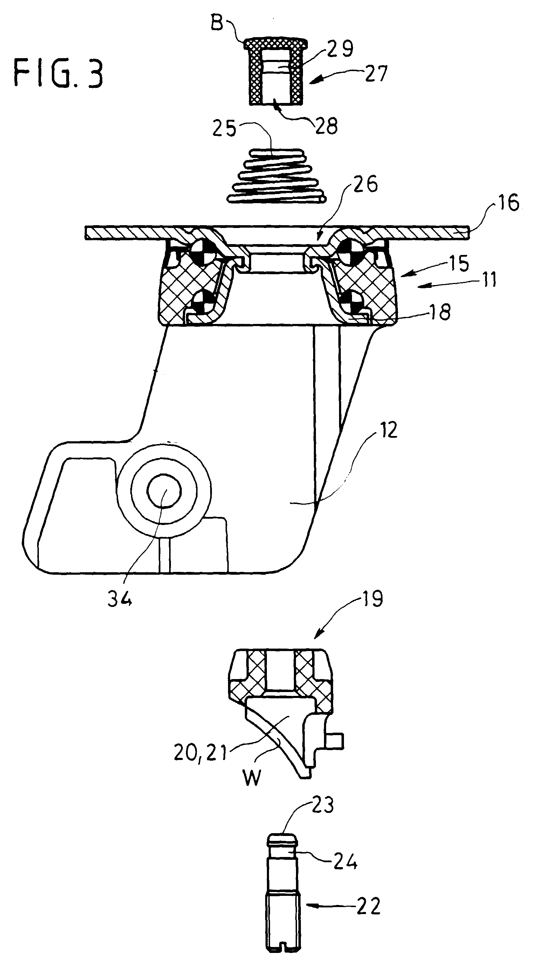

Ein Bremsschuh 19 ist mit zwei partiell angespritzten Weichgummiauflagen W versehen, die die Bremsflächen 20 und 21 ausbilden. Im Bremsschuh 19 ist mittig eine Gewinde-Stellschraube 22 angeordnet, die an ihrem freien Endbereich 23 (s. Fig. 3) eine Ringnut 24 aufweist. Der Bremsschuh 19 wird, wie man insbesondere in der Fig. 3 erkennt, nach seiner Verbindung mit der Gewinde-Stellschraube 22 von unten zwischen die Gabelschenkel 12 hindurch in das Tragteil 11 soweit eingeführt, daß ihr freier Endbereich 23 das Tragteil 11 und die Anschraubplatte 16 apparateseitig durchgreift. Dann wird eine Rückstellfeder 25 in eine Einsenkung 26 der Anschraubplatte 16 eingelegt und eine aus Kunststoff bestehende Betätigungshülse 27 von oben durch die Rückstellfeder hindurch auf den freien Endbereich 23 der Gewinde-Stellschraube 22 aufgeschoben. Die Betätigungshülse 27 weist einen Aufnahmeraum 28 für die Gewinde-Stellschraube 22 auf, der mit einer ringförmigen Einschnürung 29 versehen ist, die beim Aufdrücken der Betätigungshülse 27 auf den freien Endbereich 23 der Gewinde-Stellschraube 22 in die Ringnut 24 einrastet. Die Rückstellfeder 25 ist nunmehr zwischen der Einsenkung 26 und einem apparateseitig an der Betätigungshülse 27 angeordneten, umlaufenden Bund B gehalten. Nunmehr ist eine formschlüssige, jedoch drehbare Verbindung zwischen der Betätigungshülse 27 und der Gewinde-Stellschraube 22 vorhanden.

In diesem Montagezustand erkennt man, daß ein Rückenbolzen R bei dieser Ausführungsform durch die Gewinde-Stellschraube 22 und die Betätigungshülse 27 gebildet wird.

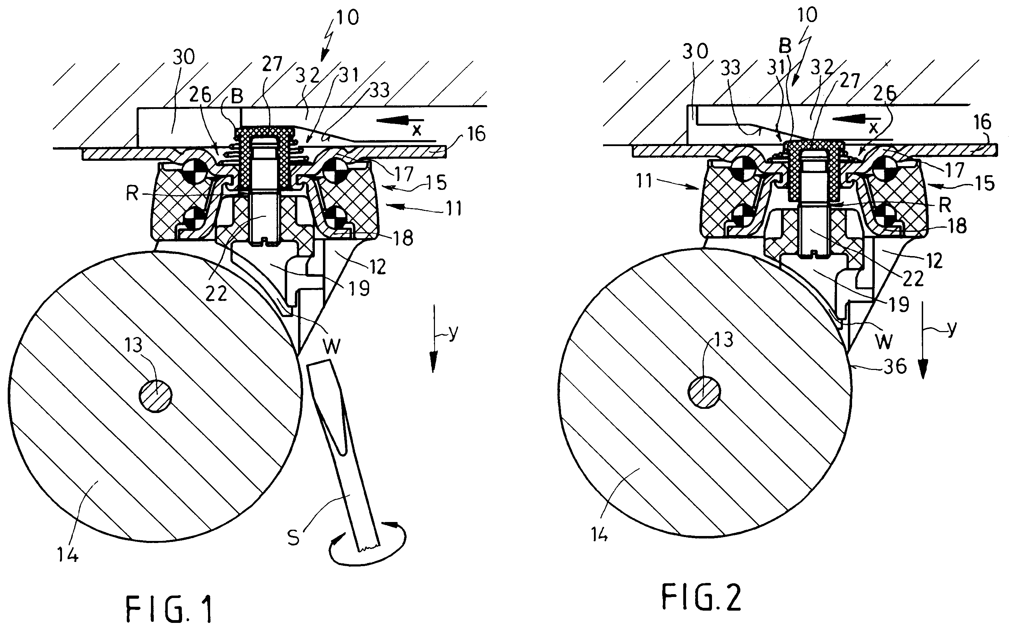

Durch die Betätigung der Gewinde-Stellschraube 22 mit Hilfe eines in Fig. 1 dargestellten Schraubendrehers S kann nun der Hubbereich des Bremsschuhes 19 zum Ausgleich von Fertigungstoleranzen bzw. Abnutzungserscheinungen verstellt werden.

Die Anschraubplatte 16 ist apparateseitig so an ein Rahmenprofil 30 angeschraubt, daß die Betätigungshülse 27 durch eine Öffnung 31 in dieses Rahmenprofil 30 hineinragt. Oberhalb der Betätigungshülse 27 ist ein Betätigungsorgan 32 angeordnet, welches mit einer rampenförmigen Betätigungsfläche 33 versehen ist und mit einem nicht dargestellten Zentralfeststeller bewegungsgekoppelt ist. Bei Bewegung des Betätigungsorgans 33 in x-Richtung (s. Fig. 2) wird die Betätigungshülse 27 und damit auch der Gewinde-Stellbolzen 22 einschließlich Bremsschuh 19 in y-Richtung soweit bewegt, bis daß die Bremsflächen 20, 21 der Weichgummiauflagen W an einer Radoberfläche 36 anliegen (s. Fig. 2).

## Patentansprüche

1. Bremsbare Lenkrolle für Apparate, Geräte, Möbel od. dgl. mit einem Tragteil, wenigstens einem am Tragteil drehbar gelagerten Rad und mit einem im Tragteil angeordneten, höhenverstellbaren sowie von einer Rückstellfeder belasteten Rückenbolzen, der das Tragteil und eine Anschraubplatte durchgreift und mit einem Bremsschuh zumindest bewegungsverbunden ist, wobei im Bremstall auf den Rückenbolzen ein apparateseitiger Festeteller einwirkt, dadurch gekennzeichnet, daß der Rückenbolzen (R) von einem ersten mit dem Tragteil (11) bewegungsverbundenen Bauteil (22) und einem zweiten apparateseitig gelagerten Bauteil (27) gebildet wird, die aneinander frei drehbar befestigt sind und daß sich die Rückstellfeder (25) apparateseitig abstützt.

2. Lenkrolle nach Anspruch 1 dadurch gekennzeichnet, daß das erste Bauteil (22) bolzenartig ausgebildet ist und mit seinem freien Endbereich in einem hülsenartigen zweiten Bauteil (27) drehbar verrastet ist.

3. Lenkrolle nach Anspruch 1 oder 2, dadurch gekennzeichnet, daß das bolzenartige Bauteil (22) mit dem Bremsschuh (19) fest verbunden ist und mit seinem freien Endbereich (23) in einer Betätigungshülse (27) so drehbar verrastet wird, daß zwischen der Betätigungshülse (27) und der Anschraubplatte (16) die Rückstellfeder (25) gehalten ist.

4. Lenkrolle nach einem der vorangehenden Ansprüche, dadurch gekennzeichnet, daß das bolzenartige Bauteil (22) als im Bremsschuh (19) angeordnete Gewinde-Stellschraube (22) ausgebildet ist.

5. Lenkrolle nach einem der vorangehenden Ansprüche, dadurch gekennzeichnet, daß der Hubbereich des Bremsschuhs (19) durch eine Drehverstellung der Gewinde-Stellschraube (22) veränderbar ist.
